Europäisches Patentamt

European Patent Office

Office européen des brevets

(19)

(11) Publication number: **0 130 747**
A2

(12) # EUROPEAN PATENT APPLICATION

(21) Application number: **84304221.9**

(22) Date of filing: **22.06.84**

(51) Int. Cl.⁴: **B 08 B 15/00,** B 01 D 46/42

(30) Priority: **22.06.83 GB 8316948**

(43) Date of publication of application: **09.01.85**
**Bulletin 85/2**

(84) Designated Contracting States: **AT BE CH DE FR GB IT LI LU NL SE**

(71) Applicant: **U.K. Asbestos Plant & Machinery Limited, Victoria Works Woodhead Road, Holmfirth Nr. Huddersfield, HD7 1PR (GB)**

(72) Inventor: **Pitman, James, Victoria Works Woodhead Road, Holmfirth Huddersfield, HD7 1PR (GB)**
Inventor: **Brook, Gerald Francis, Meadow House Marsh Lane Shipley, Nr. Huddersfield West Yorkshire, HD8 8AE (GB)**

(74) Representative: **Denmark, James, c/o Bailey Walsh & Co. 5 York Place, Leeds LS1 2SD Yorkshire (GB)**

(54) **Removal of airborne contaminant.**

(57) The invention is concerned with the removal of asbestos and the like hazardous materials from loactions such as buildings and other environments in which people work or live, and the method and apparatus involve breaking, cutting or grinding away the asbestos material and also locating an extraction nozzle and duct in the vicinity of the removal work for the pneumatic conveying of the harmful particles away from the working zone and to a filter means. The filter means preferably is in two stages namely a first coarse filter stage, and a second high efficiency filter stage for the removal of all or virtually all contaminated particles.

Removal of Airborne Contaminant

The invention is concerned with the removal of containers such as dust, microdust, fibres and any other airborne containers from working areas.' More particularly the invention is directed at the safe remova, of inhalable particulate material, and the invention has been conceived in relation to the problem of inhalable toxic material such as asbestos fibre or dust. It is to be understood however, unless specifically stated, that the invention is not restricted in its application to the removal of any specific material.

Since it is now appreciated that certain inhalable materials are toxic and give rise to respiratory diseases, there are in most industrial countries, stringent regulations deadling with the handling of these materials. Typical of these regulations is the Approved Code of Practice and Guidance Note entitled "Work with Asbestos Insulation and Asbestos Coating" published in the United Kingdom by the Health and Safety Commissions. There are similar regulations effective in the United States of America.

For many years, asbestos (crocidolite: amosite;chrysotile and fibrous anthophyllite) has been used for thermal and acoustic insulation purposes, and there are many buildings. especially industrial premises such as power stations, and hospitals where there are large quantities of asbestos in situ. Attempts are being made to remove this asbestos, but the removal processes themselves are a source of contamination. Asbestos lagging for instance is frequently mixed with gypsum and wrapped!around steam or hot water pipes and is applied to the sides of boilers. Frequently wire mesh (chicken wire) is wrapped around the asbestos and then a layer of gypsum is applied round the outside of the mesh. This type of thermal insulation has to be removed by cutting and chipping processes, which in themselves release particles of asbestos into the atmosphere. Following that, the pipe or other surface has to be burnished by wire brushing, to remove all traces of the asbestos material. This also tends to release particulate asbestos into the atmosphere. The problem is accentuated, because of the very low apparent specific gravity of the asbestos, so that particles of it remain airborne for very long periods of time.

It is exeedingly difficult to ensure that the particulate material released by the working process for removing in situ asbestos does not contaminate other areas. Water is often applied to the working area, and this helps to suppress dust, but because of the nature of asbestos fibres, it does not altogether prevent the release of the particles. Furthermore, the water usually carries dust to other areas where that dust is later released. Hence, although water assists in one sense, it gives rise to another area of contamination. The present invention has for its object, to minimise the danger of the spread of airborne particulate contaminant from a working area. The invention will incidentally give an added degree of protection to the operation.

According to a first aspect of the invention a method of removing airborne contaminant from a working area comprises the steps of: locating an inlet nozzle adjacent to the position at which fibrous particulate contaminant material is likely to be released, and sucking air, together with any such contaminant material entrained in it, by power driven means, into the inlet nozzle and thence through ducting, through filter means, preferably comprising a first filter to remove relatively large fibrous material from the air, and simultaneously therewith, collecting the fibrous discharge from the first filter, and then through a second filter which is subjected to a continuous or intermittent shaking action, to inhibit blocking of the filter media by contaminate particles, and simultaneously therewith, collecting the particulate matter removed from the air by the second filter in an enclosure, and then discharging the filtrate (clean air) into atmosphere.

The first filter may comprise a filter wheel or cyclone which removes the relatively large fibres and trash such as pieces of gypsum or chicken wire from the air stream, allowing a large part of the inhalable particulate material to pass through it to the second and fabric filter. The removal of large fibres and other trash assists in preventing blocking of the filter media in the fabric filter by the fibres.

In one method of carrying out the invention, the material passing through the suction duct is subjected to a mechanical shaking action before it is presented to the first filter. This has the effect of loosening the fibres from the heavier lumps of trash, and the trash is removed at the shaking position. The air stream which then passes on to the filter wheel contains only fibres and dust. The fibres which are then removed from the air at the first filter can be re-used, and hence it is an advantage of this form of the invention that some of the fibres are recovered for re-use.

According to a preferred feature of the invention, after the air stream has passed through the fabric filter, it is passed through a high efficiency particulate air filter (H.E.P.A.) as a further safeguard.

According to a second aspect of the invention, apparatus for removing airborne contaminant from a working area comprises: a suction duct fitted with an inlet nozzle, and leading to the upstream side of a filter means which preferably comprises a first filter and a transfer duct leading from the outlet side of the first filter to the inlet side of a second filter in which the filter element is adapted to be subject to a shaking action, there being a power driven fan adapted to suck air successfully through the suction duct, the first filter, the transfer duct and the second filter.

Preferably a high efficiency particulate air filter (H.E.P.A.) is provided on the outlet side of the second filter. It is further preferred that the fan is mounted on the casing of the second filter so that the fan itself is located on the downstream side of the filter media in the second filter, and upstream or downstream of the H.E.P.A. filter.

The inlet nozzle may be provided with attachment means whereby it can be attached to an object in the working area, for example, if the apparatus is to be used for the stripping of asbestos insulation from pipes, then the nozzle may be fitted with hooks to suspend it from a pipe. It is further preferred that at least part of the suction duct is flexible.

The apparatus may be portable, particularly it it is intended to be used for the removal of asbestos or other toxic material from existing locations. Alternatively, in the case of a factory where the toxic material is being processed, the apparatus may take the form of a fixed installation.

An apparatus intended for use during the stripping of asbestos from stream pipes (for example in a power station) and its method of use will now be described by way of example of both aspects of the invention, and with reference to the accompanying drawings, in which:-

Fig. 1 is a diagrammatic re[resentation of the complete apparatus;

Fig. 2 is a diagrammatic representation of an alternative embodiment of the complete apparatus;

Fig. 3 is a diagrammatic representation of a further alternative embodiment of the complete apparatus; and

Fig. 4 is a perspective view of a fabric filter with part of the casing cut away to show some of the interior.

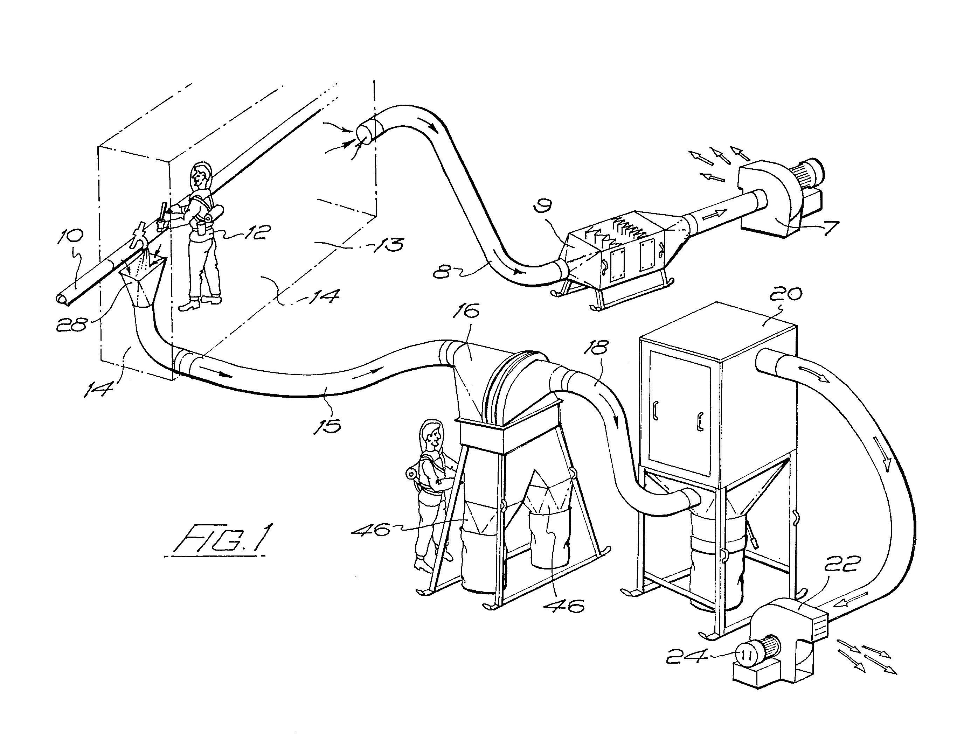

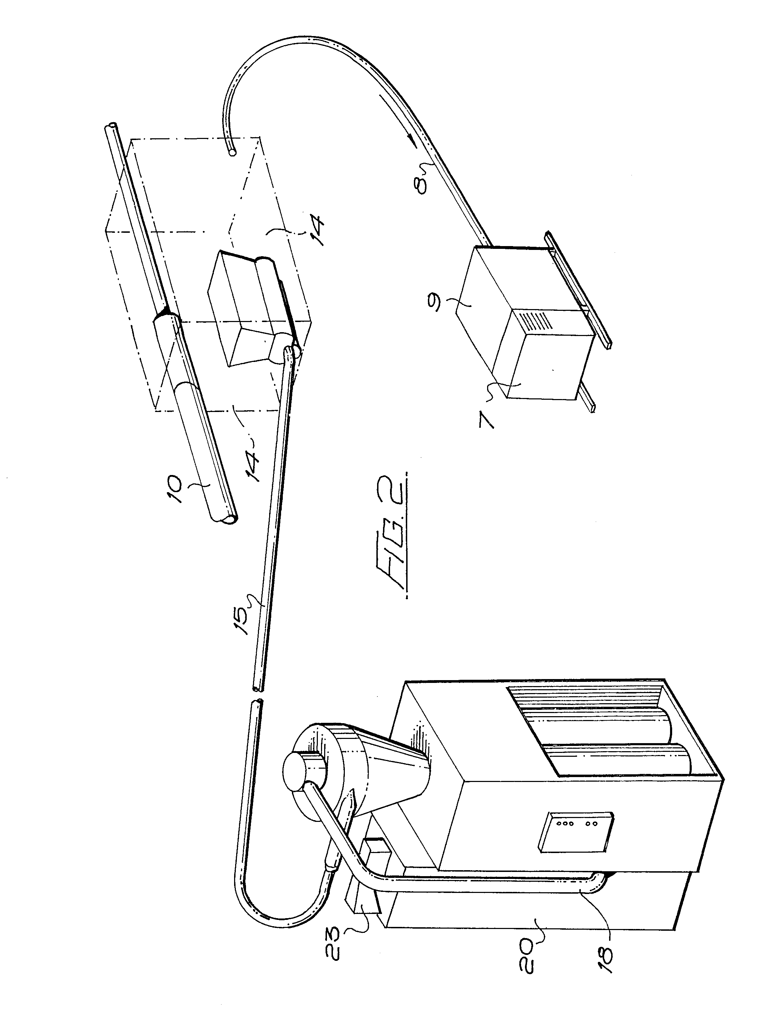

In the embodiments of Figs. 1 and 2, the apparatus is for removing a conventional asbestos and chicken wire type thermal insulation from steam piping. The insulation is applied in a thick layer; for instance if the pipe has a bore of 6 inches diameter, the asbestos coating may be 3 inches thick. Special power driven portable tools and a power driven wire brush are used by the operative to detach the asbestos by any suitable means and then to clean and burnish the pipe to ensure that no asbestos is left on it.

In Fig. 1, the pipe is indicated at 10, and an operative working on the pipe to remove the asbestos insulation is shown at 12. The large pieces of asbestos may be collected in a strong polyethylene bag, which has to be cleaned and sealed before it is removed from the contaminant area 13. Precautions are usually taken to inhibit the spread of dust (airborne particulate asbestos) released by the cutting and brushing operations.    For instance, screens 14 are used around the working area and water may be continuously sprayed on to the pipe during the removing operation.    Despite all such precautions, some particulate matter, incluidng the dangerous inhalable particulate (I.P.) will inevitably be released into the air surrounding the working zone, and the apparatus hereinafter described is intended to deal with this hazard.

Essentially, the apparatus comprises a suction duct 15; a first and coarse filter 16;  a transfer duct 18;  a fabric filter unit 20;  a suction fan 22 driven by a motor 24 and a high efficiency particulate air filter (H.E.P.A.).

Because the apparatus is intended to be used with locations involving previously applied asbestos, it is made so as to portable.    The fabric filter unit 20 is free standing as is the first filter 16.    The transfer duct 18 is flexible in embodiment of Fig. 1 but is rigid in the Fig. 2 embodiment.

At its inlet end, the surction duct 14 is provided with an inlet nozzle 28 which is in the form of a funnel with a wide mouth.    The nozzle 28 is suspended from the pipe 10 by hooks (not shown), although it could be secured to other articles adjacent to the pipe 19, as long as its open mouth is situated as close as possible to the working zone, and preferably beneath that zone.    As shown in Fig. 1, the nozzle 28 is able to catch pieces of asbestos and fibre tufts falling from the pipe as they become detached from the remainder of the asbestos insulation.    That is useful, but does not solve the problem of release of particulate material into the atmosphere.

The first filter 16 may comprise a Shirley (or Morley) delivery wheel, as well known in the textile industry.

A geared motor (not shown) drives the disc or wheel of the filler, so that the latter rotates about its own axis, so that fresh parts of the wheel are continually being brought into register with the tube 14.

In use, fibre-laden air passes through the filter wheel which is rotated. /as a result, the fibres which will not pass through the filter screen on the wheel collect in a collecting chamber and the dust-laden air passes through the screen and into the outlet 18. Eventually the build-up of fibres in a collecting chamber is such that a flap opens and some of the fibres (now largely free from small particulate material - dust - drop from the wheel).

For the purpose of the present invention, the entire wheel is enclosed in a container sealed to prevent escape of dust from the interior of the container into atmosphere. Delivery chutes 46 are open at their bottom ends and is adapted in turn to receive fibrous material dropping from the wheel. Before the apparatus is operated, strong plastics bags 48 are fitted around the open lower ends of the chutes 46, to receive the material falling through the chute in turn.

A movable and possibly perforated deflector is to guide the material into each of the branch chutes in turn. This enables a bag to be tied and removed from one branch chute and a fresh bag to be fitted to that branch chute, whilst material is falling into the other branch chute.

In the arrangement of Fig. 2, the first filter 16 is a cyclone separator located above a bagging unit 30 in which filtered fibres are bagged in much the same manner as manner as described in relation to Fig. 1. The outlet duct 18 from the cyclone separator leads to the second filter 20 which is of the same construction in both the Fig. 1 and Fig. 2 embodiment.

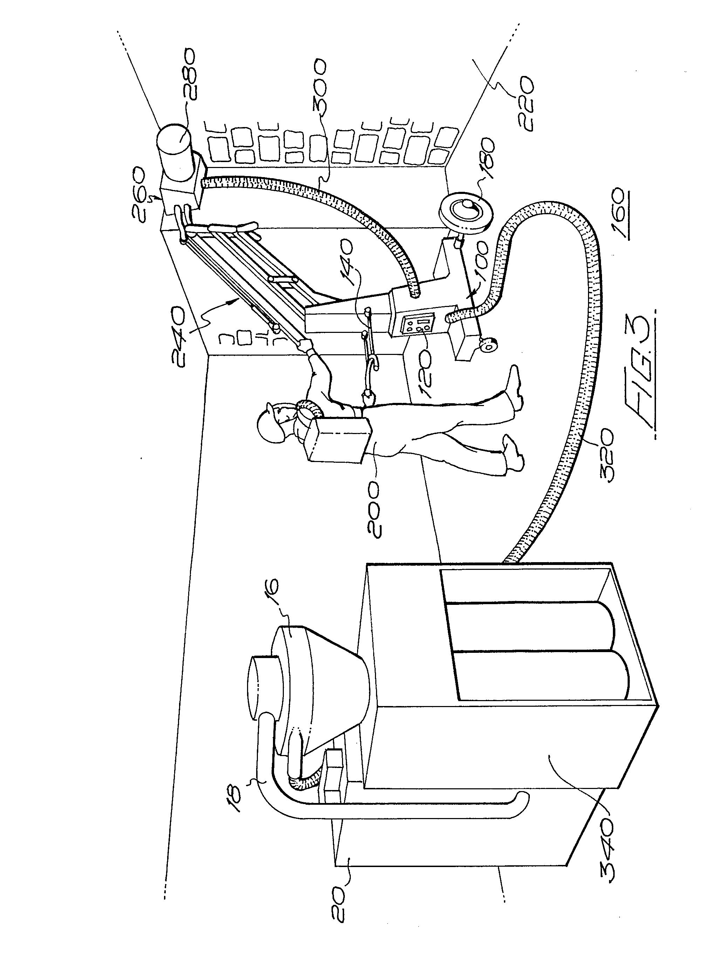

Referring bow to Fig. 3 of the drawings, the apparatus shown comprises a mobile pedestal 100 having a control panel 120 and a handle 140 for manipulating the pedestal 100 over the floor 160 on its wheels 180. The pedestal 100 is manipulated by an operator 200 and the apparatus is being used for the removal of an asbestos coating on a vertical wall 220.

At the top of the pedestal 100 is a boom structure 240 which is made up of a number of links which are so connected as to enable the boom to expand and contract lengthwise under the control of the operator. The boom is also mounted so that the boom can be swung about a horizontal axis and a vertical axis separately or at the same time whereby the outer end of the boom can be moved in a universal movement. At the outer end of the boom structure 240 is a grinding head 260, which embodies a grinding device and power drive therefor and the grinding device is surrounded by a suction housing 280 to which is connected a suction conduit 300. The suction conduit 300 leads to the pedestal which may include a fan to apply the suction to the conduit 300 and such fan being controlled by the operator via the control panel 120. A further conduit 320 leads from the pedestal 100 to a filter unit 340 in which the airborne asbestos is filtered from the air delivered by the conduits 300, 320 thereto and the filtered air is returned to the surrounding environment. The filtering unit is the same as that illustrated in Fig. 2 and comprises a first filter 16, and a second filter 20 connected by duct 18.

Operation of the apparatus is similar to that described above, and except that flat asbestos sheet is being removed and a power removal tool is used in the grinding head 260 and a grinding device thereof will be able to engage the surface to be ground away and that the mounting of the grinding head in the manner shown enables the grinding of large flat asbestos surfaces being walls, ceilings, linings and coatings.

The use of power removal tools may be used in the Figs. 1 and 2 embodiments, and as illustrated in the Figs. 1 and 2 embodiments, the Fig. 3 embodiment may use protective sheets 16 to define a working zone.

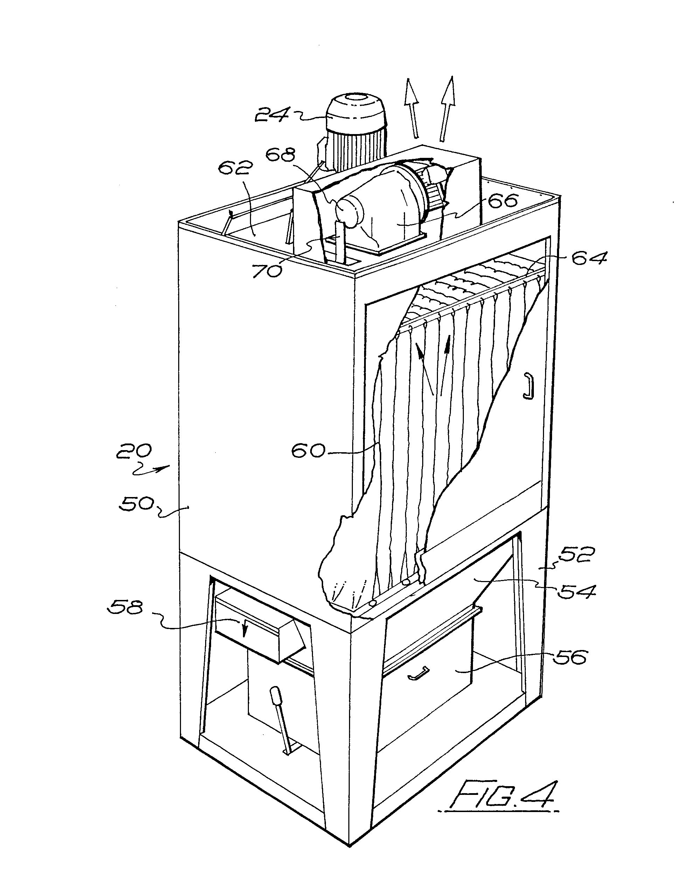

The second filter 20 is shown in greater detail in Fig. 4. Basically, it comprises a main box 50 supported on a plinth 52. A plenum chamber 54 located inside the plinth, has inclined side walls and leads downwards into a collecting bin 56. The bin 56 is sealed on to the lower end of the plenum chamber when the apparatus is in use. The transfer duct 18 is connected to an air inlet 58 in one side of the plenum chamber 54.

Within the main box 50, there is a multiple Vee filter element 60, which is essentially a fabric filter screen folded to form two sets of interdigitated V-shaped spaces, those on te bottom side of the screen being open to the plenum chamber 54, and those on the top side being open to an outlet opening 62. The upper ends of the filter element are secured to a shaking frame 64. This frame is pivoted inside the box 50, and a small geared motor 66 drives a crank 68 whichis connected via a connecting rod 70 to the shaking frame.

When dust-laden air first passes through the fabric filter element 60, some very small particulate material may pass through the filter. However, dust particles begin to collect on the filter element, increasing its resistance to the passage of particles in the air. In other words, the filtering efficiency increases up to the required level. From then on the filter unit 20 will function correctly. Periodically, it is necessary to arrest the flow of air through the filter unit 20, and to oscillate the shaking frame 64 by running the motor 66. This shakes th filter fabric 60, causing particles of dust adhering to it to be released. These particles fall into the bin 56. Cleaning the filter element in this manner enables the filter to function correctly.

Fig. 4 illustrates the top end of the fabric filter unit 20 as being open, but in practice, an outlet chamber covers the outlet opening 62, and the fan 22 is fitted inside this chamber although the fan is shown as being connected to the filter unit 20 by a duct 21 in the Fig. 1 embodiment. There is an outlet from the chamber and the H.E.P.A. filter unit 23 (Fig. 2) is fitted to this outlet.

In the case of the Fig. 1 and Fig. 2 embodiments, the atmosphere in the working zone as defined by screens 14 is withdrawn and filtered through duct 8 and two stage filter unit 9 by means of suction fan 7. The filter unit 9 is an H.E.P.A. unit which is 99.35% efficient.

It is now possible to consider the operation of the complete apparatus, when the operative 12 is removing theasbestos insulation from the pipe 10 or from the wall as shown in Fig. 3. It has already been mentioned that the problem is that created by the release of te very light inhalable particulate into the atmosphere at the zone of operation. Before work commences on the asbestos insulation, the inlet nozzle 28 will be located adjacent the pipe 10, and the motor 24 operated to drive the fan 22. As a result, air is sucked into the nozzle 28, and the interior of the entire system comprising the suction duct 14, filter 16, transfer duct 18 and fabric filter unit 20 is placed under a reduced pressure, so that there is no danger of particulate material being carried out of the system through any joints. The fan 22 is arranged to blow the air passing through this system out through the H.E.P.A. filter 23. It is to be understood that a powerful suction action is created by the fan 22, and as a result, airborne particles liberated at the working zone will be drawn into the nozzle 28. Hence, no contaminant is carried away from the working zone in the air.

The air stream passing through the suction duct 14 carries both fibres and inhalable particles as well as other materials such as pieces of gypsum or chicken wire. (Strictly speaking, much of the inhalable dust is in the form of very short fibres, but for practical purposes they can be regarded as dust). At the filter 16, the larger fibres and any other solid matter except the dust are separated from the air stream and collected in the bag or bags 48.

The air stream passes through the transfer duct 18 and into the plenum chamber 54 of the fabric filter 20. Air then passes through the filter element 60, but once the filter has begun to operate at the desired efficiency little or no inhalable particulate can pass through the filter cloth.

The filtered air is passed out into atmosphere through the H.E.P.A. filter 23. The H.E.P.A. filter itself may take the form of a fabric filter device. Since the air which is presented to the H.E.P.A. filter is already substantially clean, it is almost certain that the air allowed to escape into atmosphere will meet the threshold limit value (T.V.L.) for this kind of work.

The positioning of the coarse filter 16 in the ducting in advance of the fabric filter unit 20 has a particularly beneficial effect. The fabric filter unit 20, is well adapted to deal with the filtering of dust-like particulate, but if there is a substantial amount of what would normally be regarded as fibres in the air stream presented to the unit 20, then those fibres will continually block the fabirc filter 60, and prevent it functioning properly. In fact, if air with entrained fibrous material were simply sucked away from the pipe 10, and presented straight into the fabric filter unit 20, it would be necessary to stop the operation of the apparatus at very frequent intervals, in order to empty the fibrous material from the unit 20 (by removing the bin 56), and of course this would seriously hamper the speed at which the removing operation could be carried out. Because the filter 16 takes out the fibres, the air stream which is presented to the fabric filter unit 20 contains only particulate or dust, and therefore the unit 20 can be operated for relatively long periods between shaking the filter element.

In the apparatus which has been described above, there is a single suction duct 14 connected to the first filter 16. However, it is possible to provide two or more suction ducts 14 connected to filter 16.

The operating zone in each case may be enclosed in a plastics "tent". This "tent" comprises an imperforate flat roof sheet with walls hanging therefrom, eacha of these walls being constituted by a series of over-lapping strips of transparent plastics material. The entire "tent" is suspended by cords from any part of the building or structure near to the operating zone. In this case, the suction duct 14 is fitted with a V-shaped tray at its inlet end, and the tray is itself fitted with hooks whereby it can eb suspended from the pipe. The tray can be passed through one of the joints between two adjacent strips of the "tent", and the suction duct will pass through this joint throughout the operation of removing the asbestos material from the section of the pipe 10 above the tray.

With this kind of arrangement, the operative stands outside the "tent" and only his hands and forearms extend through two of the joints in the front wall of the "tent" during the removing operation.  The "tent" itself tends to inhibit the spread of airborne particulate matter away from the immediate zone where the asbestos is being removed from the pipe.  Apart from relatively large pieces of asbestos or chicken wire, which the operative himself can place in the sack (also contained within the "tent") most of the fibre tufts and loose fibres will tend to fall into the tray. This fibrous material will be sucked into the suction duct, together with most if not all of the particulate material released at the pipe as a result of the machining and brushing operation.  The filtering process thereafter is the same as that described with reference to Fig. 1.

As an additional means of sealing the "tent", the edges of the plastics strip may be fitted with strips of hooked pile fabric, such as that sold under the Registered Trade Mark VELCRO.  After the "tent" has been positioned, the over-lapping edges of the strips can be presed together to seal them through the use of the VELCRO fastenings.

It will be appreciated, that at the completion of a removing operation, the operation can use the apparatus as a various cleaner, for the purpose of cleaning the area around the working zone. It is in fact desirable that all parts of the equipment around this zone should be subjected to a thorough vacuum cleaning process, even if they appear to be relatively dust free, in order to remove the hazardous inhalable particulate which might have escaped from the suction nozzle, during the actual removing operation.

It will be appreciated that the bin 56 has to be withdrawn from the fabric filter unit 20 from time-to-time to allow the particulate which collects in it to be removed. There is some danger that even during this operation, inhalable particulate may be released into the atmosphere. With a view to avoiding this danger, the bin 56 may be omitted and the chute 54 continued downwards in the form of a hopper open at its bottom end. Before the apparatus is used, a strong plastics bag is fitted over the bottom end of the hopper and sealed to the hopper. The particulate filtered out of the air stream within the unit 20, and shaken off the filter media 60 then falls into this bag. As a further precaution, the lower part of the bag can be closed (by nipping it below the hopper outlet) and sealed before it is severed from a top part of the bag which remains on the hopper with its lower end closed where it was nipped together. Then the next bag can be fitted over the remaining stub of the first bag and sealed on to the hopper before releasing the stub and allowing it to fall into the said next bag. In this way the bottom of the hopper is never opened.

Most asbestos removing operations have to be carried out inside buildings. In that case, it is possible to completely seal the room in which the removing operation is being carried out, against the impress of air, and to position the entire apparatus of any embodiment illustrated within this sealed embodiment. There is

15

then a finite quantity of air which can be contaminated by the release of inhalable particulate during the removing operation. In that case, the apparatus can be left running after the asbestos removing operation has been completed, for a sufficient time to ensure that every part of the finite quantity of air within the sealed room must have passed through a H.E.P.A. filter unit. This should ensure that the atmosphere within the sealed room is completely freed from contaminating particles. This is in any event advisable to run the motor 24 for say 10 minutes after concluding work on the insulation on the pipe 10 to allow dust to be drawn through the apparatus.

In the above specific description, the fan 22 has been illustrated on the upstream side of the H.E.P.A. filter. This enables easy fitting and removal of the H.E.P.A. filter, but it is slightly disadvantageous, in that if there is any leakage of air from the outlet region of the fabric filter unit 20, between the fan 22 and the H.E.P.A. filter 26, then that air leakage could still contain the hazardous particulate material. Preferably therefore, the fan 22 should be located on the downstream side of the H.E.P.A. filter unit as shown in Fig. 1, so that the air is sucked through that unit. In that way, the H.E.P.A. unit and the duct leading from the outlet of the fabric filter unit 20 to the H.E.P.A. filter unit, is included in the system which is maintained at a reduced pressure throughout the operation of the apparatus. This should ensure that there cannot be any leakage of contaminated air out of the duct between the fabric filter 20 and the H.E.P.A. filter unit.

In a modification of the apparatus (which is not illustrated) there is provided a mechanical fibre shaker of a kind which is used in the textile industry for removing trash from the fibres. There are various forms of textile shaker which could be modified for use in the present method - or even in some cases unsed without modification. One such form of shaker comprises a set of rotor blades rotating in a grid, and is described in the Specification of British Patent No. 1,184,243.

Whatever form of shaker is employed, its purpose is to agitate the fibrous and other material, so that the fibres become suspended in air and the heavier trash falls to the bottom of the shaker.

The shaker is located between the inlet nozzle 28 and the filter wheel 16, and the suction duct 14 leads from the nozzle 28 to the shaker, there being an extension of the suction duct leading from the output end of the shaker to the inlet side of the filter wheel.

When this modified form of th invention is in use, because the heavy trash (gypsum, plaster, chicken wire and the like) has been removed at the mechanical shaker, the material removed at the filter wheel consists of fibres only. These fibres are re-usable, and it is one of the advantages of the modified version of the invention that re-usable fibrous asbestos is collected in sealed bags at this point. Further, this fibrous material is rendered more easy to use in subsequent processing, because some of the inhalable particulate will have been removed from it by passing through the screen in the filter wheel.

16A

Whilst the appended claims seek to define the present invention as envisaged by the applicant at the time of submitting this application, the applicant reserves the right within the law to claim as an invention in general or specific terms, whether by way of divisional application or otherwise, any feature, method and/or aspect or any combination of features, methods and/or aspects disclosed herein which is or are subsequently identified to be inventive, and regardless of whether, in the case of a combination as aforesaid, the features, methods and/or aspects are disclosed individually in a single one of or in respective embodiments disclosed herein.

0130747

17

CLAIMS
------

1. A method of removing airborne contaminant from a working area comprises the steps of: locating an inlet nozzle adjacent to the position at which fibrous particulate contaminant material is likely to be released, and sucking air, together with any such contaminant material entrained in it, by power driven means, into the inlet nozzle and thence through ducting, through filter means, preferably comprising a first filter to remove relatively large fibrous material from the air, and simultaneously therewith, collecting the fibrous discharge from the first filter, and then through a second filter which is subjected to a continuous or intermittent shaking action, to inhibit blocking of the filter media by contaminate particles, and simultaneously therewith, collecting the particulate matter removed from the air by the second filter in an enclosure, and then discharging the filtrate (clean air) into atmosphere.

2. A method according to Claim 1, wherein the first filter comprises cyclone filter or a disc wheel filter.

3. A methof according to Claim 1 or 2, wherein the second filter comprises a fabric filter and means for shaking the fabric filter to vibrate dust collected thereon.

4. A method according to Claim 3, wherein the filter comprises two series of fabrics folded concertina fashion and inter-fitting.

5. A method according to any preceding claim, wherein the working zone is enclosed by a sheet means to prevent the escape from the zone of the airborne particles.

6. A method according to Claim 5, wherein the working zone is evacuated by means of an auxiliary fan and high efficiency filter unit.

7. A method according to any preceding Claim, wherein the extraction duct nozzle located adjacent the working zone comprises a hopper construction.

8. A method according to any preceding claim, wherein the asbestos or other material is removed by means of a power tool.

9. A method according to Claim 8, wherein the power tool and nozzle are locatd adjacent so that fragments and particles generated by the power tool will be sucked into the extraction duct.

10. A method according to Claim 9, wherein the power tool and extraction duct nozzle are carried on the end of a mobile boom under the control of an operator which can be moved over a surface to be removed.

11. A method of removing airborne contaminant from a working zone comprising a movable boom structure having at one end a power tool for the removal of material from a wall or ceiling surface or the like, which removal creates the airborne contaminant, a suction nozzle in the vicinity of the power tool also mounted on the boom, and suction duct leading away from the nozzle and connected to a fan and filter means for the pneumatic conveying away from the working zone of airborne contaminant.

12. A method of removing airborne contaminate from a working zone comprising suction nozzle locate in the vicinity of the working zone and pneumatic conveying means for transferring the working contaminate pneumatically through a duct connected to the nozzle.

13. Apparatus for removing airborne contaminant from a working area comprises: a suction duct fitted with an inlet nozzle, and leading to the upstream side of a filter means which preferably comprises a first filter and a transfer duct leading from the outlet side of the first filter to the inlet side of a second filter in which the filter element is adapted to be subject to a shaking action, there being a power driven fan adapted to suck air successfully through the suction duct, the first filter, the transfer duct and the second filter.

FIG.1

FIG.2

FIG.3.

FIG.4